# EUROPEAN PATENT SPECIFICATION

(11) **EP 1 495 953 B1**
(45) Date of publication and mention of the grant of the patent: **21.05.2008**
(21) Application number: 04016026.9
(22) Date of filing: 07.07.2004
(51) Int. Cl.: B62J 6/02, B62J 6/00, B62K 19/48

(54) **Straddle-type vehicle**
Im Grätschsitz zu benutzendes Fahrzeug
Véhicule du type monté a califourchon

(30) Priority: 07.07.2003 JP 2003192904; 03.06.2004 JP 2004165814
(43) Date of publication of application: 12.01.2005
(73) Proprietor: Yamaha Hatsudoki Kabushiki Kaisha, Iwata-shi, Shizuoka-ken (JP)
(72) Inventor: Oohira, Masaru, Iwata-shi Shizuoka-ken (JP)
(74) Representative: Grünecker, Kinkeldey, Stockmair & Schwanhäusser Anwaltssozietät

(56) References cited:
- EP-A- 1 081 032
- WO-A-03/035456
- US-A- 4 461 508
- PATENT ABSTRACTS OF JAPAN vol. 1999, no. 14, 22 December 1999 (1999-12-22) & JP 11 245868 A (SUZUKI MOTOR CORP), 14 September 1999 (1999-09-14)
- PATENT ABSTRACTS OF JAPAN vol. 1999, no. 09, 30 July 1999 (1999-07-30) & JP 11 115846 A (TAIWAN YAMAHA HATSUDOKI KENKYU KAIHATSU CHUSHIN KOFUN YUGENKOSHI), 27 April 1999 (1999-04-27)
- PATENT ABSTRACTS OF JAPAN vol. 2003, no. 10, 8 October 2003 (2003-10-08) & JP 2003 165477 A (HONDA MOTOR CO LTD), 10 June 2003 (2003-06-10)
- PATENT ABSTRACTS OF JAPAN vol. 2002, no. 06, 4 June 2002 (2002-06-04) & JP 2002 046676 A (HONDA MOTOR CO LTD), 12 February 2002 (2002-02-12)
- PATENT ABSTRACTS OF JAPAN vol. 2000, no. 01, 31 January 2000 (2000-01-31) & JP 11 278334 A (SUZUKI MOTOR CORP), 12 October 1999 (1999-10-12)

## Description

The present invention relates to a straddle-type vehicle according to the preamble part of the independent claim 1.

From JP 11 245868 A a straddle-type vehicle as indicated above is known.

Such a conventional straddle-type vehicle, as it is known e.g. from JP-A-Hei 11-115846, includes a body cowl constituting a part of a vehicle cover and a screen as a windbreak at a forward side of the vehicle. A pair of right and left flasher lamps is located below the headlamp. The flasher lamp is located at a lens opening as a through hole formed in a body cowl and secured from a back side of the body cowl.

Further, a maintenance opening is formed in a vicinity of the lens opening of the body cowl for bulb replacement of the flasher lamps. The maintenance for the flasher lamp is performed from the back side of the body cowl.

However, the straddle-type vehicle having such a conventional mounting structure of the flasher lamp has limited accessibility for the maintenance of the flasher lamp from the back side of the vehicle cover. Thus, there are needs for easy maintenance, precise assembly of joining part of the vehicle cover and the flasher lamp without gaps as well as improved outward appearance by concealment of the mounting part of the flasher lamps and the like.

Therefore, it is an objective of the present invention to improve a straddle-type vehicle as indicated above so as to enable mounting of the flasher lamps by precisely positioning them relative to the vehicle cover thereby keeping good outward appearance, as well as easy maintenance of the flasher lamps.

The objective is solved according to the present invention by a straddle-type vehicle having a headlamp mounted in a generally center part in a lateral direction of a body cowl constituting a part of a vehicle cover located at a forward side of the vehicle, and a pair of right and left flasher lamps disposed on both sides of the headlamp in a lateral direction of the vehicle, wherein a mount part formed at each of the right and left flasher lamps is mounted to the body cowl, wherein there is provided a garnish panel being removable mounted to the body cowl and covering the mount part, wherein the garnish panel comprises an engaging part engaged with an engaged part formed at each of the right and left flasher lamps.

Preferably, the mount part of the flasher lamp is formed at a side of a second rim of the flasher lamp, wherein a first rim of the flasher lamp is positioned to a flasher positioning part of the body cowl.

More preferably, the garnish panel is removable mounted at the body cowl with a flasher positioning part of the garnish panel constituting a part of a vehicle cover being positioned to the second rim, and/or In that the mount part of the flasher lamp is covered by a concealing part in which the flasher positioning part of the garnish panel is formed, and/or in that the engaging part is formed in the concealing part so that the engaging part is engaged with the engaged part formed at a side of the second rim of the flasher lamp.

Still more preferably, the pair of right and left flasher lamps disposed in distanced locations above the headlamp and/or that the flasher lamp has a generally triangular shape in a vehicle front view.

As described above, according to a preferred embodiment, the straddle-type vehicle has a headlamp mounted in a generally center part in a lateral direction of a body cowl constituting a part of a cover located in a forward side of the vehicle and a pair of right and left flasher lamps disposed in distanced locations above the headlamp, wherein a mount part formed at a side of a second rim of the flasher lamp is mounted to the body cowl with a first rim of the flasher lamp being positioned to a flasher positioning part of the body cowl, and wherein a garnish panel is mounted in the body cowl with a flasher positioning part of the garnish panel constituting a part of a vehicle cover being positioned to the second rim, a mount part of the flasher lamp is covered by a concealing part in which the flasher positioning part of the garnish panel is formed, and an engaging part is formed in the concealing part so that the engaging part is engaged with an engaged part formed at a side of the second rim of the flasher lamp.

According to a further preferred embodiment, the flasher lamp has a generally triangular shape in a vehicle front view, a generally horizontal top side in the vehicle front view forms a third rim, one side of other two sides located in an external side of the vehicle forms the first rim, and the other side located in an interior side forms the second rim, and that an inner panel constituting a part of the vehicle cover is positioned in a back side of the flasher lamp in a longitudinal direction of the vehicle, the inner panel is secured to the body cowl, and a flasher positioning part of the inner panel is positioned to the third rim of the flasher lamp

Therein, preferably a securing part between the inner panel and the body cowl is covered by the garnish panel, and the garnish panel is engaged in a vicinity of the securing part of the inner panel.

It is further desirable that an upwardly extending overlapping part is formed in the third rim of the flasher lamp, and the overlapping part overlaps with a forward side of the inner panel.

It is still further preferable that a fitting part is formed in the flasher lamp so that the fitting part is fitted with a fitted part of the body cowl by insertion of the flasher lamp from the front side to the rear side, and a securing direction of the mount part is different from a direction of the insertion.

According to a further preferred embodiment, the garnish panel is positioned between a screen and the flasher lamp placed outwardly of the screen in a lateral direction of the vehicle, in an inclined manner toward the screen and in a lateral direction of the vehicle, and a rising piece is formed at the edge of the garnish panel on the side of the screen to be raised upward, and mounted to a mount piece disposed on the body cowl by a screw in an inclined manner toward the front side of the vehicle.

As has been mentioned in the foregoing, the mount part of the second rim of the flasher lamp is secured to the body cowl. The first rim of the flasher lamp is positioned and mounted by using the flasher positioning part of the body cowl as a reference point.

Thus, the first rim of the flasher lamp can be precisely positioned to the flasher positioning part of the body cowl. Further, when the garnish panel is removable mounted to the body cowl, the concealing part of the garnish panel covers the mount part of the flasher lamp. Thus, with the garnish panel being mounted, the mount part of the flasher lamp is invisible from the outside. In addition, the engaging part is formed in the concealing part in which the flasher positioning part of the garnish panel is formed. When this engaging part is engaged with the engaged part formed at the side of the second rim of the flasher lamp, the flasher positioning part of the concealing part of the garnish panel can be positioned and mounted by using the second rim of the flasher lamp as the reference point. Thereby, the concealing part of the garnish panel can be precisely positioned relative to the second rim of the flasher lamp.

Therefore the mount part of the flasher lamp is covered by the garnish panel and invisible from the outside. The first and second rims of the flasher, adjacent body cowl and the flasher positioning part of the garnish panel can be precisely positioned and secured. Therefore, the shifted positions and uneven gaps can be avoided thereby contributing to improve the outward appearance.

Furthermore, the mount part of the flasher lamp for the body cowl is formed at the second rim. The mount part of the flasher lamp is concealed by the concealing part of the garnish panel. When the garnish panel is not being mounted, the mount part of the flasher lamp is exposed at the forward side of the vehicle. Thereby, the installment and removal of the flasher lamp is easy, and its maintenance is also easy.

As further explained above, the inner panel is positioned in the back side of the flasher lamp in a longitudinal direction of the vehicle and secured to the body cowl. The flasher positioning part of the inner panel is positioned to the third rim at the top side, in the vehicle front view, of the flasher lamp. Since the three sides of the flasher lamp forming the generally triangular shape in the vehicle front view are enclosed by three parts such as the body cowl, the garnish panel and the inner panel, the outward appearance can be improved.

Preferably, the securing part between the inner panel and the body cowl is covered by the garnish panel. The garnish panel is engaged in a vicinity of the securing part of the inner panel. Thus, the garnish panel and the inner panel can be precisely positioned and secured, allowing good outward appearance.

Moreover, it is preferred that the overlapping part extending upwardly is formed in the third rim of the flasher lamp. This overlapping part is arranged to overlap with the inner panel. Thus, with the flasher lamp not being directly joined to the inner panel, even if the positioning is shifted due to the manufacturing errors, a gap is less likely formed. Thereby, the good outward appearance can be maintained.

Further, preferably the fitting part is formed in the flasher lamp. This fitting part is fitted with the fitted part of the body cowl by the insertion of the flasher lamp from the front side to the rear side. Thus, the installment and removal of the flasher lamp is easily performed from the front side of the vehicle. In addition, the securing direction of the mount part of the flasher lamp for the body cowl is different from the insertion direction of the fitted part. Thus, the mounting of the flasher lamp can be secured and its maintenance can be easily performed.

As described before, it is preferred that a rising piece is formed at the edge of the garnish panel on the side of the screen to be raised upward, and mounted on a mount piece disposed on the body cowl by a screw in an inclined manner toward the front side of the vehicle. Therefore, the mount part of the garnish panel is invisible from the outside, allowing the better outward appearance. At the same time, when the screw is removed from the rising piece and the concealing part is disengaged, the garnish panel can be easily removed. Thereby, the maintenance can be easily performed.

Further preferred embodiments are subject to the subclaims.

In the following, a preferred embodiment of the invention will be described in greater detail with reference to the attached drawings, wherein:
- Fig. 1: is a front view showing the appearance of the straddle-type vehicle according to the embodiment of the present invention in which the covers and the lamps are installed;
- Fig. 2: is a side view of Fig. 1 according to the embodiment of the present invention;
- Fig. 3: is a front view of Fig. 1 according to the embodiment of the present invention, with the flasher lamp and the garnish panel being removed;
- Fig. 4: is a side view of Fig. 3 according to the embodiment of the present invention;
- Fig. 5: is a front view of the body cowl according to the embodiment of the present invention;
- Fig. 6: is a side view of the body cowl according to the embodiment of the present invention;
- Fig. 7: is a cross-sectional view taken along a line A-A in Fig. 3 according to the embodiment of the present invention;
- Fig. 8: is a cross-sectional view taken along a line B-B in Fig. 3 according to the embodiment of the present invention;
- Fig. 9: is a front view of the first inner plate according to the embodiment of the present invention;
- Fig. 10: is a side view of the first inner plate according to the embodiment of the present invention;
- Fig. 11: is a cross-sectional view taken along a line D-D in Fig. 4 according to the embodiment of the present invention;
- Fig. 12: is a cross-sectional view taken along a line E-E in Fig. 4 according to the embodiment of the present invention;
- Fig. 13: is a cross-sectional view taken along a line F-F in Fig. 4 according to the embodiment of the present invention;
- Fig. 14: is a top plan view of the second inner plate according to the embodiment of the present invention;
- Fig. 15: is a front view of the screen according to the embodiment of the present invention;
- Fig. 16: is a cross-sectional view taken along a line C-C in Fig. 4 according to the embodiment of the present invention;
- Fig. 17: is a cross-sectional view taken along a line G-G in Fig. 3 according to the embodiment of the present invention;
- Fig. 18: is a cross-sectional view taken along a line H-H in Fig. 4 according to the embodiment of the present invention;
- Fig. 19: is a top plan view of the garnish panel according to the embodiment of the present invention;
- Fig. 20: is a side view of the garnish panel according to the embodiment of the present invention;
- Fig. 21: is a cross-sectional view taken along a line I-I in Fig. 3 according to the embodiment of the present invention;
- Fig. 22: is a cross-sectional view taken along a line J-J in Fig. 20 according to the embodiment of the present invention;
- Fig. 23: is a cross-sectional view taken along a line K-K in Fig. 4 according to the embodiment of the present invention; and
- Fig. 24: is a cross-sectional view taken along a line L-L in Fig. 3 according to the embodiment of the present invention.

The embodiment of the present invention will be described hereinafter.

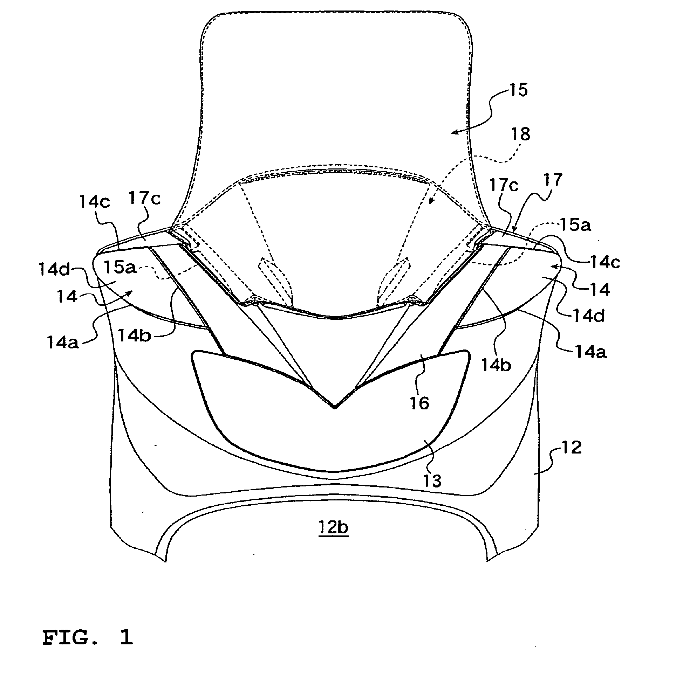

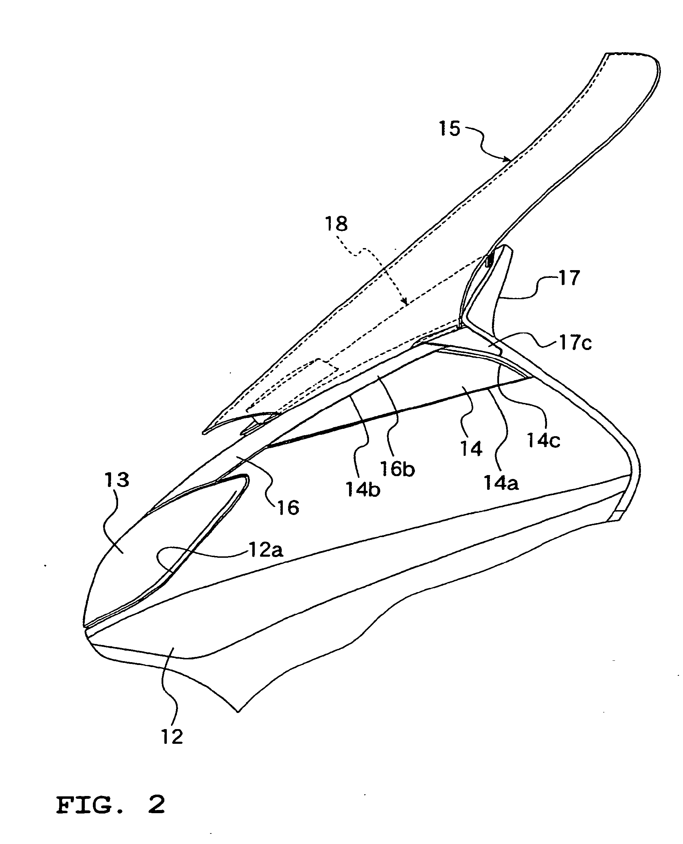

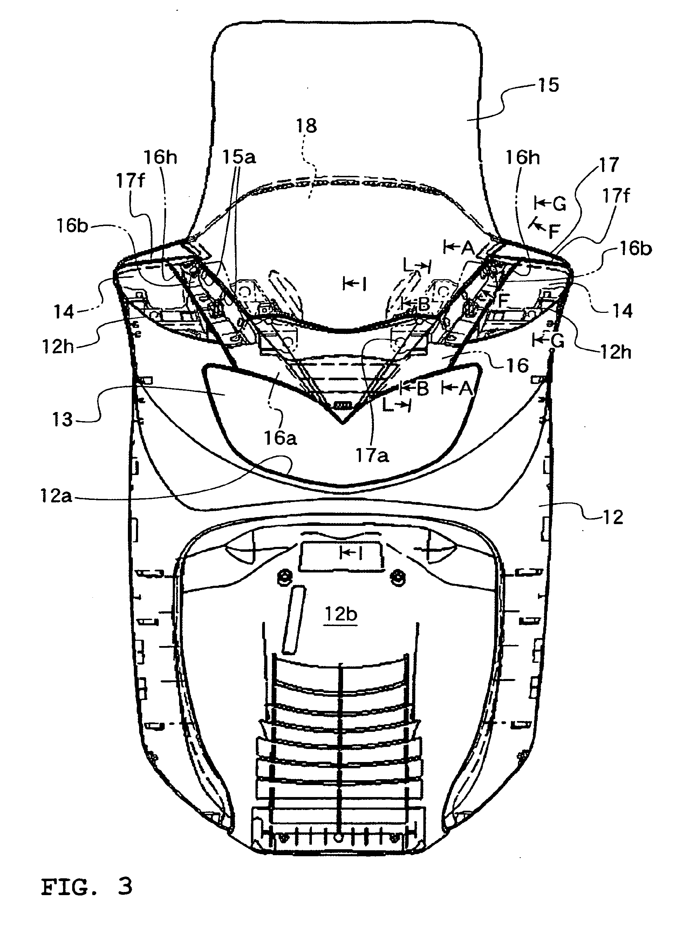

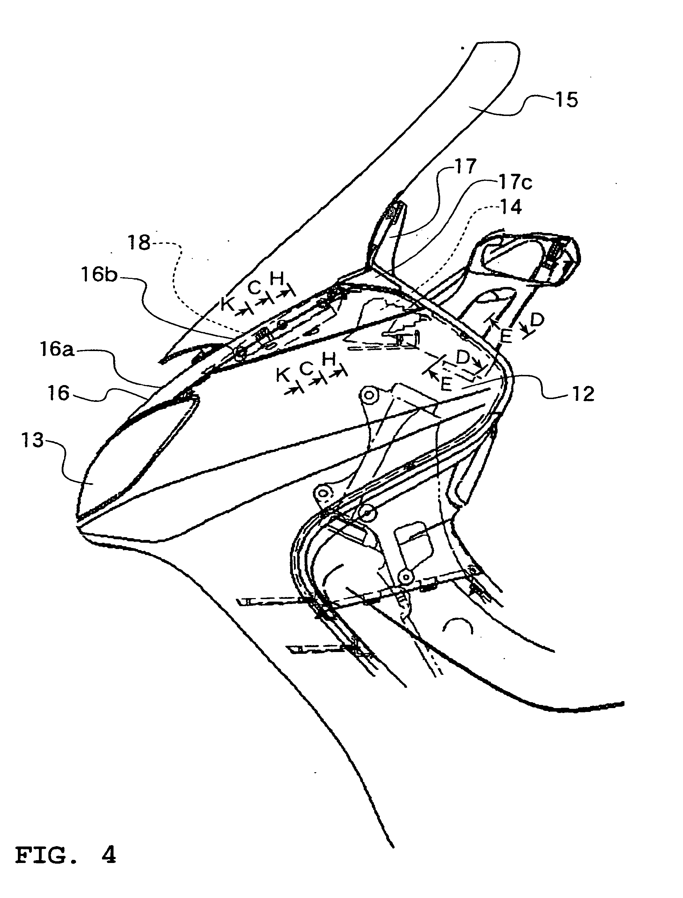

First, the structures will be described as follows. A body cowl 12 constituting a part of a vehicle cover is located in a forward side of a straddle-type vehicle as shown in Figs.1-4. A headlamp 13 is mounted in a generally center part in a lateral direction of the body cowl 12. A pair of flasher lamps 14 is mounted above the headlamp with a distance to each other.

In addition, a screen 15 is mounted on a top of the body cowl 12 between the right and left flasher lamps 14. A garnish panel 16 constituting a part of a vehicle cover is mounted, surrounded by the headlamp 13, the flasher lamps 14, and the screen 15.

Further, a first inner panel 17 in which meters and the like are installed is mounted in a top rear side of the body cowl 12 in a longitudinal direction of the vehicle. A second inner panel 18 is mounted at a forward side of the first inner panel 17 in an interior side of the screen 15.

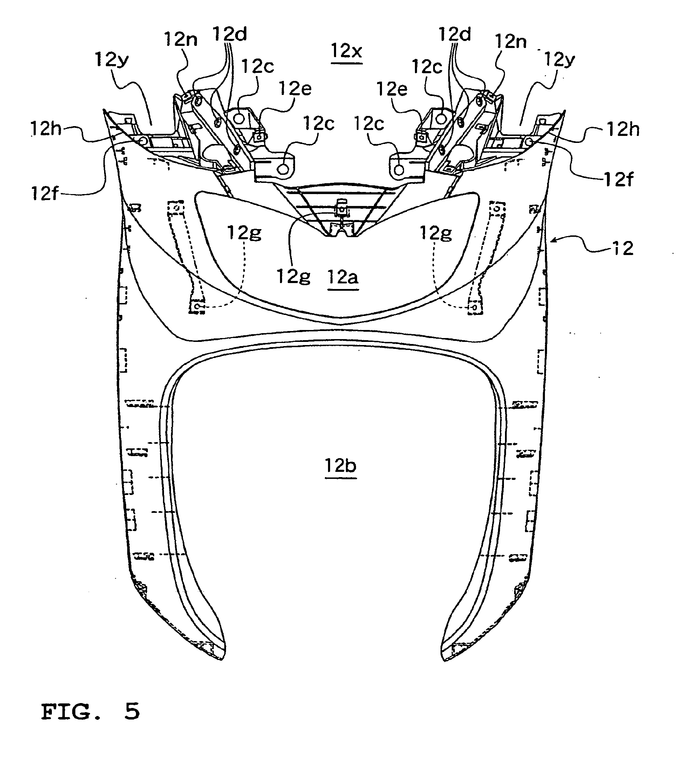

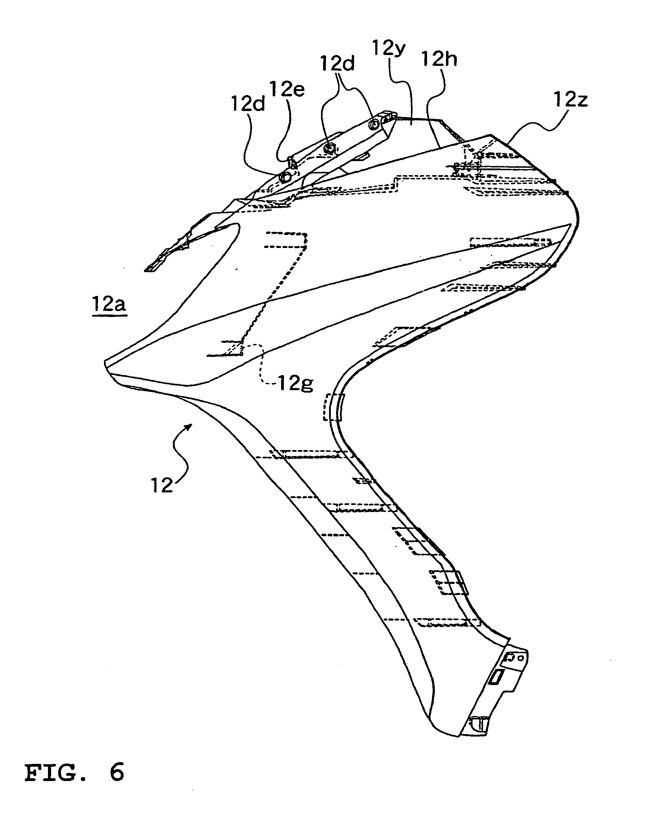

As shown in Figs. 5 and 6, the body cowl 12 includes a headlamp opening 12a formed in a generally center part in the lateral direction, and a front wheel opening 12b is formed below the headlamp opening 12a.

A screen mounting part 12x is formed in the center position above the headlamp opening 12a. The screen 15 and the second inner panel 18 are mounted in the screen mounting part 12x. Flasher mounting parts 12y are formed in both sides of the screen mounting part 12x. In addition, an inner panel mounting part 12z in which the first inner panel 17 is mounted is formed in the top rear side of the body cowl 12.

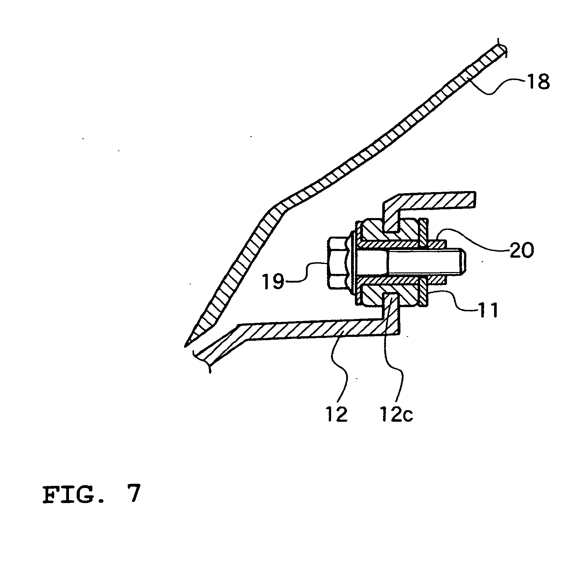

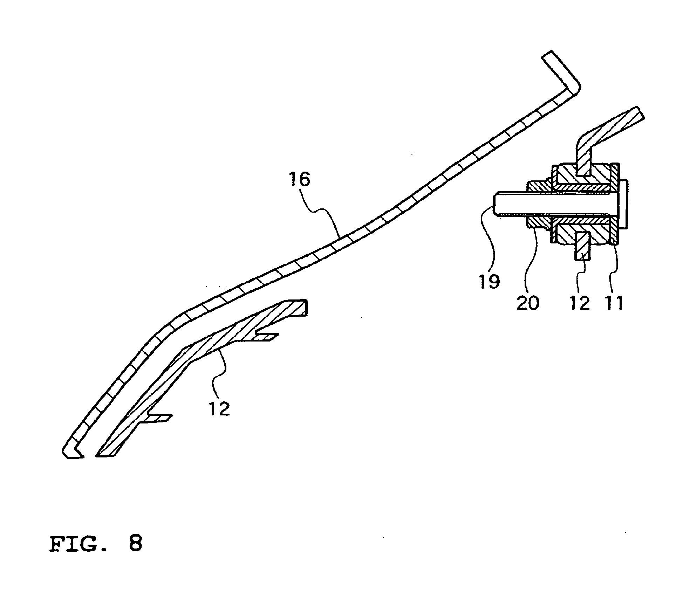

As shown in Figs. 7 and 8, plural stay mounting parts 12c formed in both side above the headlamp opening 12a are mounted in plural stays 11 mounted in a frame (not shown) through bolts 19 and nuts 20. Thereby, the body cowl 12 is secured to a vehicle body.

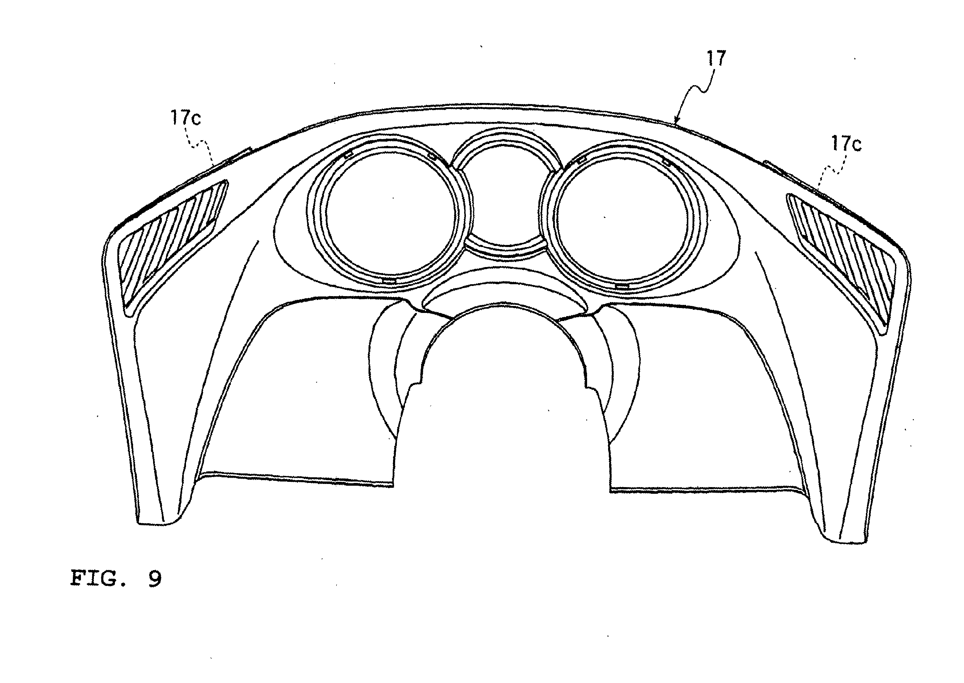

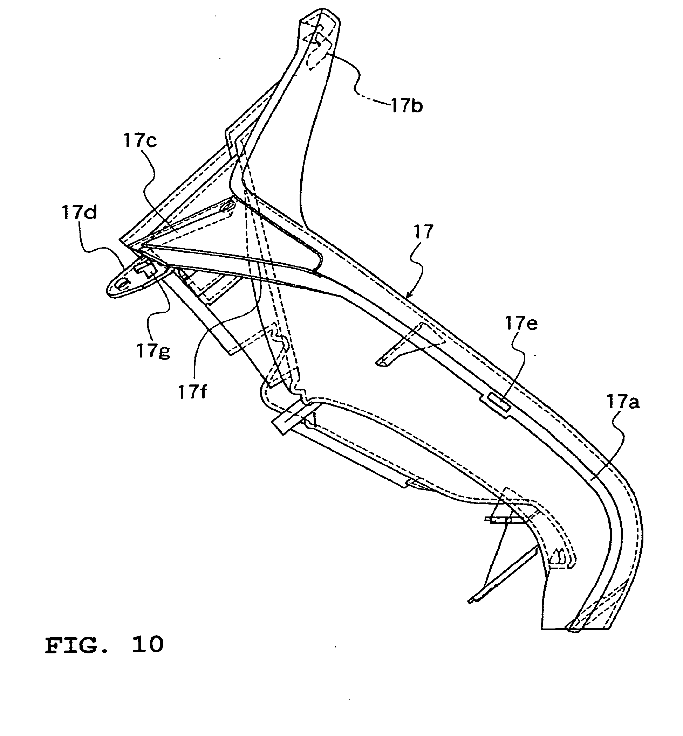

The inner panel 17 mounted in an inner panel mounting part 12z of the body cowl 12 is a molded element having a vertical or rising shape as shown in Figs. 9 and 10 in which meters are installed. The inner panel 17 has a shape for protecting and covering the opening section in the upper rear section of the body cowl 12 including the back side of the flasher lamp 14 in a longitudinal direction of the vehicle and the rear side of the second inner panel 18.

A leveled part 17a fitted with a rim at a rear end of the body cowl 12 is formed in a rim of the first inner panel 17. In an upper side, an engagement piece 17b engaged with the second inner panel 18 is mounted. A projecting part 17c projecting to the forward side of the vehicle and extending toward the flasher lamp 14 is mounted in both sides in the upper side of the inner panel 17. In addition, a securing part 17d extending to the forward side of the vehicle from the above projecting part 17c is mounted in the body cowl 12.

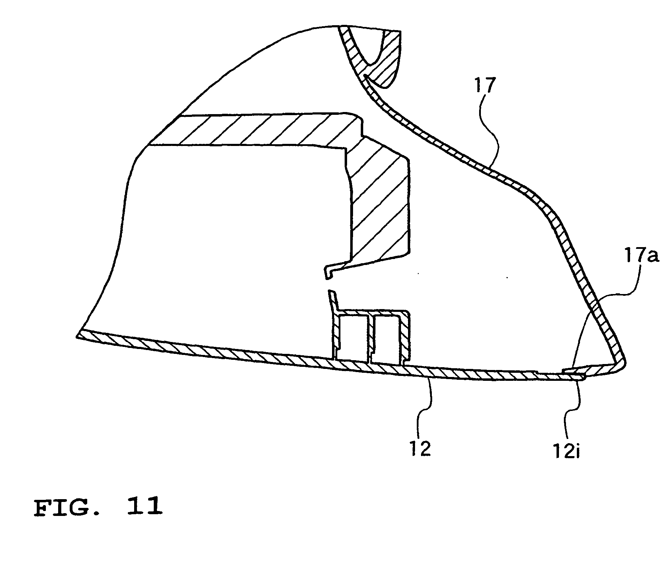

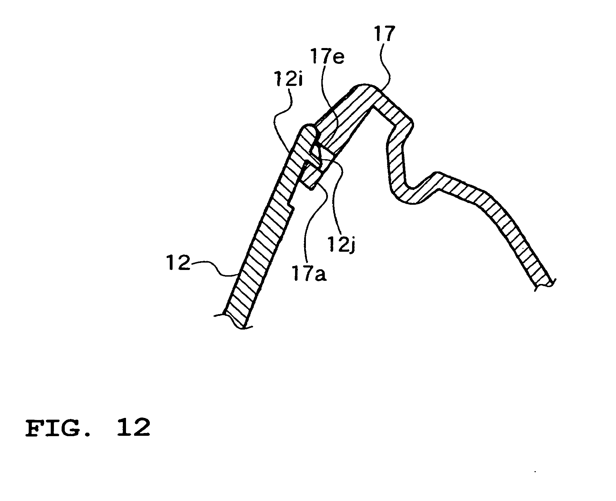

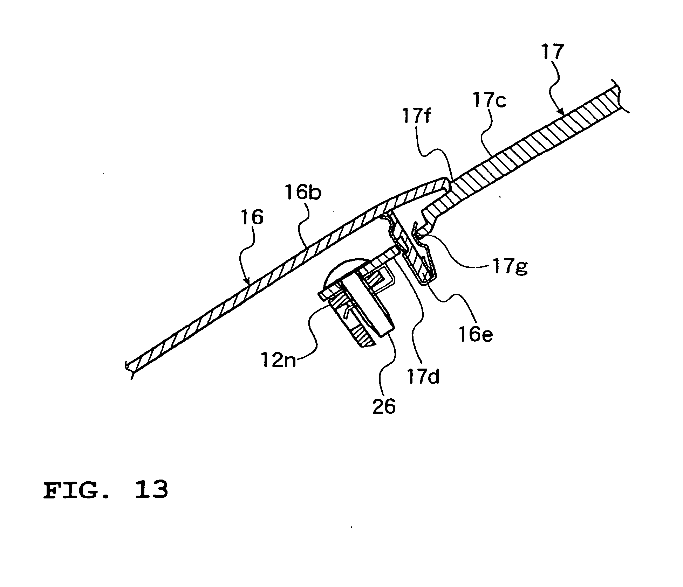

The first inner panel 17 is mounted as shown in Fig. 11. The leveled part 17a is mated with a fitting part 12i formed in the rim at the rear end of the body cowl 12. As shown in Fig. 12, an engagement piece 12j formed in the fitting part 12i is engaged with an engaged hole 17e formed in the leveled part 17a. Furthermore, as shown in Fig. 13, the securing part 17d extending from the projecting part 17c is secured to a secured part 12n formed in the body cowl 12 by a screw 26.

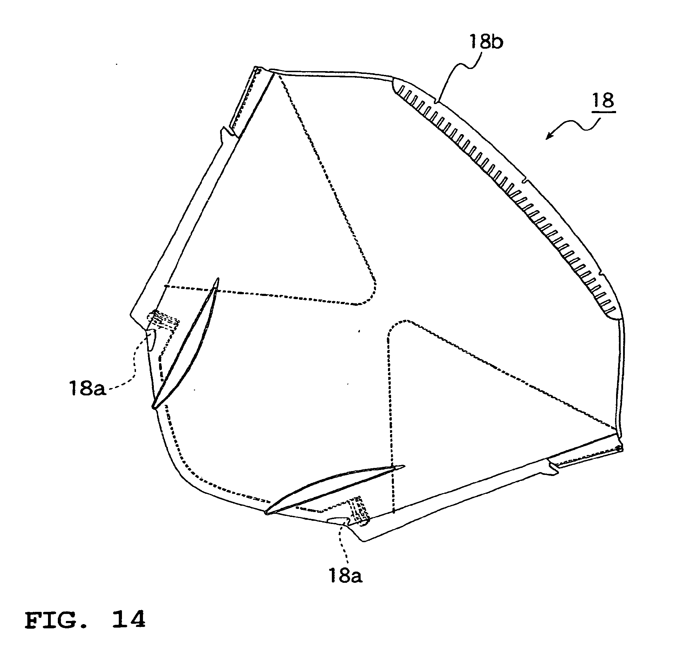

Furthermore, the second inner panel 18 mounted in the screen mounting part 12x of the body cowl 12 is made of a curved board as shown in Fig. 14. A mount piece 18a for the body cowl 12 is formed in a forward side of the second inner panel 18. An engaging part 18b engaged with the engagement piece 17b of the first inner panel 17 is formed in a rear side of the second inner panel 18.

The engaging part 18b at the rear side of the second inner panel 18 is engaged with the engagement piece 17b of the first inner panel 17. The mount piece 18a is secured to the body cowl 12 with the garnish panel 16 and the first inner panel 17 as will be described later.

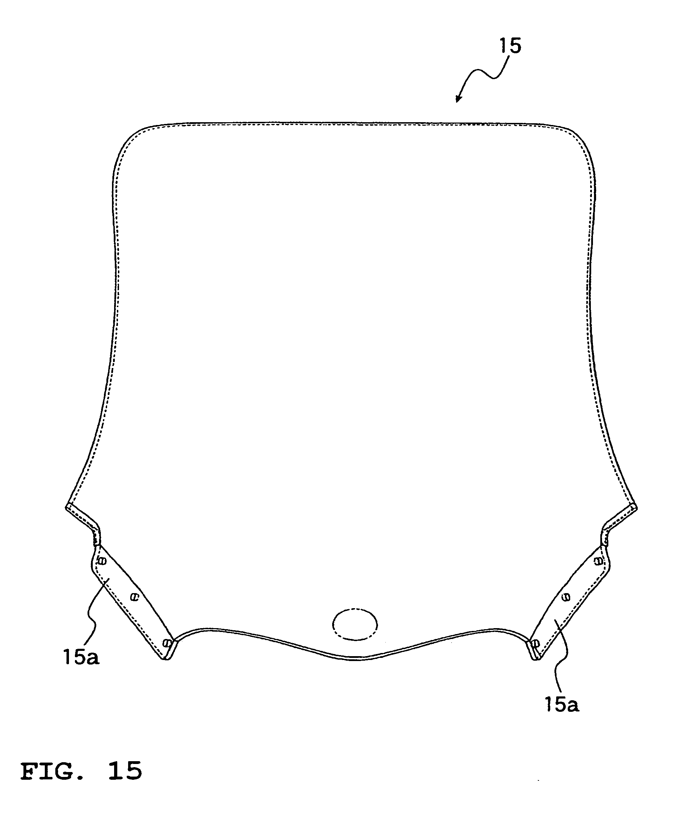

Furthermore, the screen 15 mounted in the screen mounting part 12x is made of a transparent or a translucent curved board as shown in Fig. 15. At a lower end of the screen 15, mount pieces 15a to be mounted to the body cowl 12 are mounted.

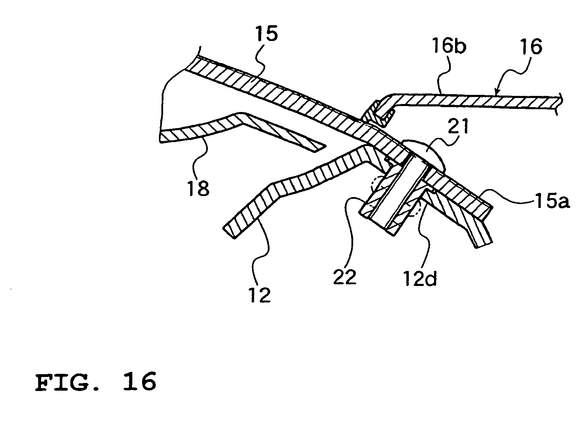

As shown in Fig. 16, each mount piece 15a is mounted to the body cowl 12 through a bolt 21 and a nut 22 in a screen mounting part 12d formed in plural numbers in a vicinity of the stay mounting part 12c.

Next, the flasher lamp 14 mounted in the flasher mounting part 12y of the body cowl 12 forms a generally triangular shape when it is installed in the vehicle in a vehicle front view as shown in Fig. 1. The flasher lamp 14 is provided with an external surface part 14d including a first rim 14a forming an external side, a second rim 14b forming a center part in the lateral direction, and a third rim 14c forming a generally horizontal upper side in the vehicle front view. Further, the flasher lamp 14 includes a flasher lamp main body 14f formed integrally with the external surface part 14d and extending to the rear side of the vehicle. This flasher lamp main body 14f has a bulb and a reflector plate but its detailed illustration is omitted from the drawing.

In the third rim 14c of the external surface part 14d, an overlapping part 14g is formed, extending upwardly from the flasher lamp main body 14f and overlapping the forward side of the projecting part 17c of the first inner panel 17.

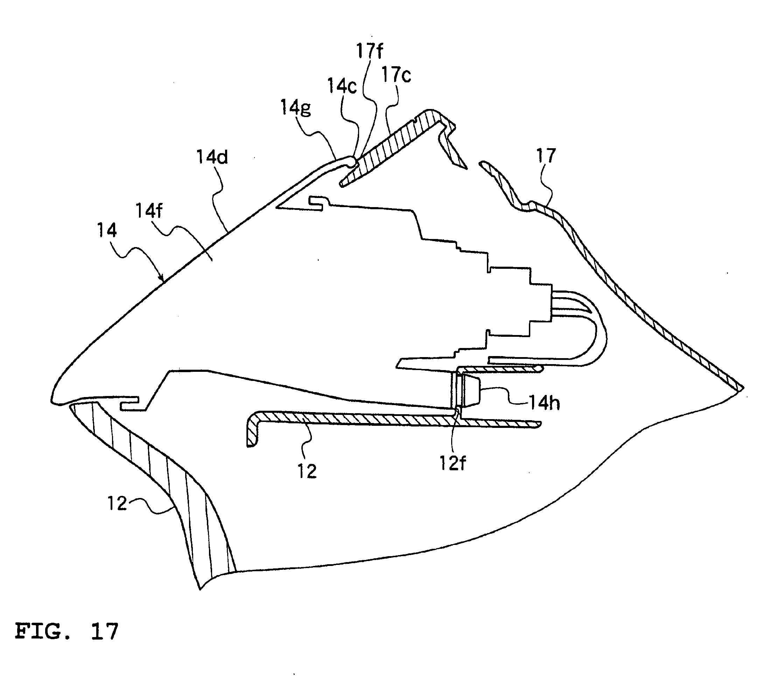

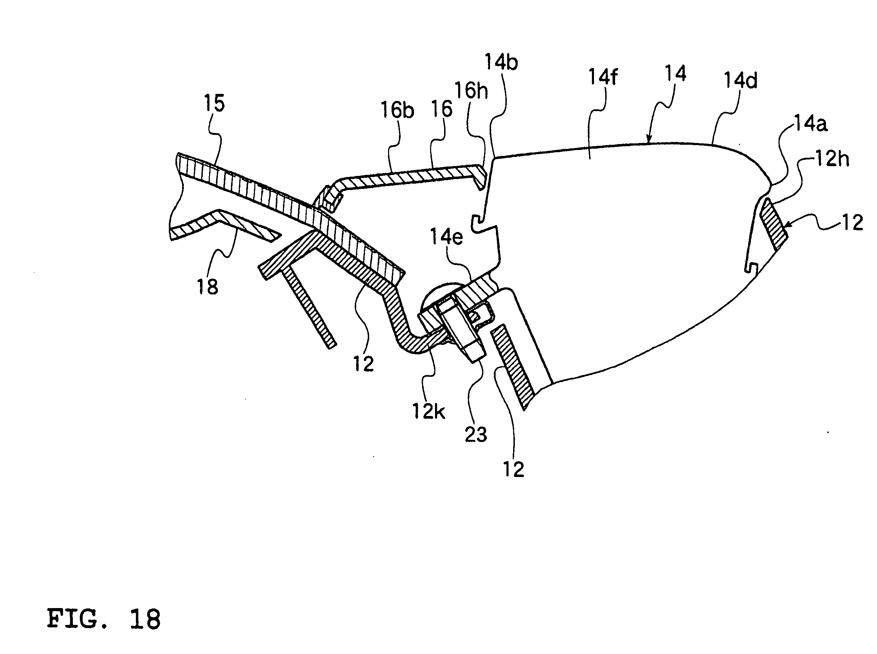

As shown in Fig. 17, a fitting part 14h is formed in the back side of the flasher lamp main body 14f in a longitudinal direction of the vehicle. The fitting part 14h projects toward the rear side and can be fitted with the body cowl 12. In addition, as shown in Fig. 18, a mounting part 14e secured to the body cowl 12 is formed in the second rim 14b of the flasher lamp main body 14f. This mounting part 14e is securable in a different direction from the fitting part 14h.

First, such a flasher lamp 14 is inserted to the body cowl 12 from the front side to the rear side as shown in Fig. 17. Then, it is mounted to the body cowl 12 by fitting the fitting part 14h with the fitted part 12f formed in the body cowl 12.

In this case, as shown in Fig. 18, a flasher positioning part 12h is formed in the flasher mounting part 12y of the body cowl 12 for positioning the first rim 14a of the flasher lamp 14. Thus, the first rim 14a of the flasher lamp 14 can be precisely positioned to the flasher positioning part 12h.

As shown in Fig. 17, a leveled flasher positioning part 17f for positioning the third rim 14c of the flasher lamp 14 is formed in the projecting part 17c of the first inner panel 17. Thus, when the flasher lamp 14 is inserted and the overlapping part 14g of the external surface part 14d is overlapped with the forward side of the projecting part 17c of the first inner panel 17, the third rim 14c of the flasher lamp 14 can be precisely positioned to the flasher positioning part 17f.

As shown in Fig. 18, with the flasher lamp 14 being positioned, the mounting part 14e mounted in the second rim 14b is secured to a mounted part 12k disposed in the body cowl 12 by a screw 23. A securing direction of the mounting part 14e, namely a fastening direction of the screw 23 is different from an inserting direction of the flasher lamp 14, namely the fitting direction between the fitting part 14h and the fitted part 12f. Thereby, the flasher lamp 14 is immovably secured.

Next, the garnish panel 16 constituting a part of a vehicle cover is located between the flasher lamp 14 disposed as described above and the screen 15, and between the top section of the headlamp 13 and the screen 15.

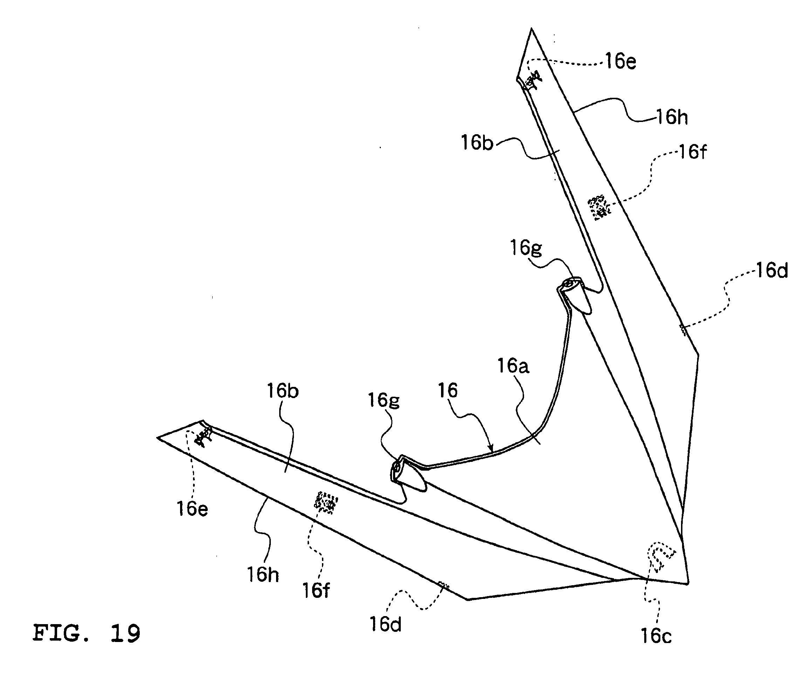

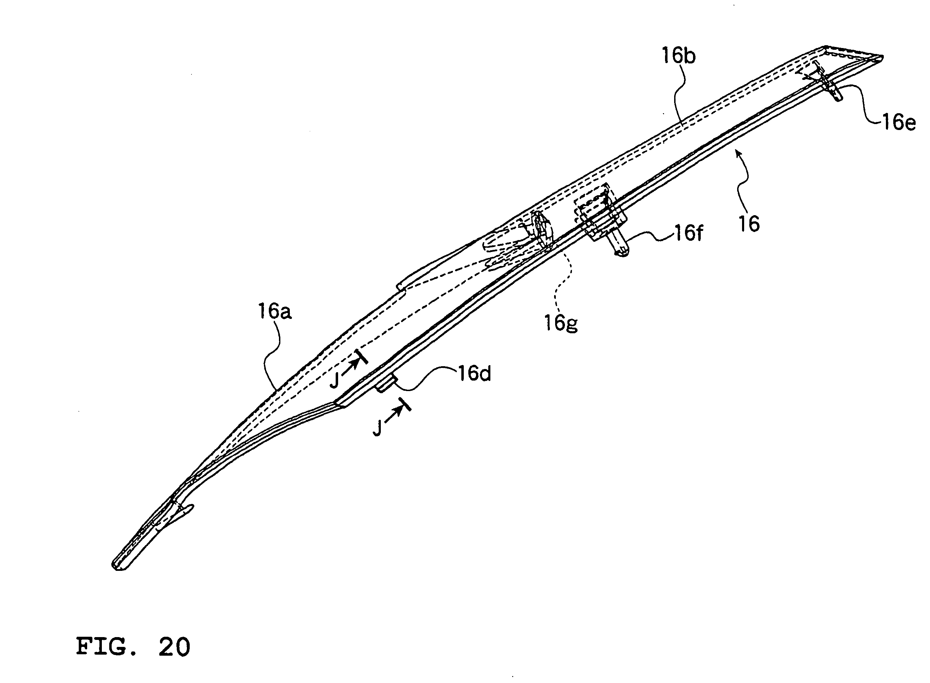

As shown in Figs. 19 and 20, the garnish panel 16 has a connecting portion 16a located between the headlamp 13 and the screen 15 and a concealing part 16b extending upwardly from both ends of the connecting portion 16a. The concealing part 16b is located between the flasher lamp 14 and the screen 15. The right and left concealing parts 16b are disposed in an inclined manner toward the screen 15 and in the lateral direction of the vehicle. A flasher positioning part 16h positioned to the second rim 14b of the flasher lamp 14 is mounted in a side rim of the concealing part 16b at the external side of the vehicle.

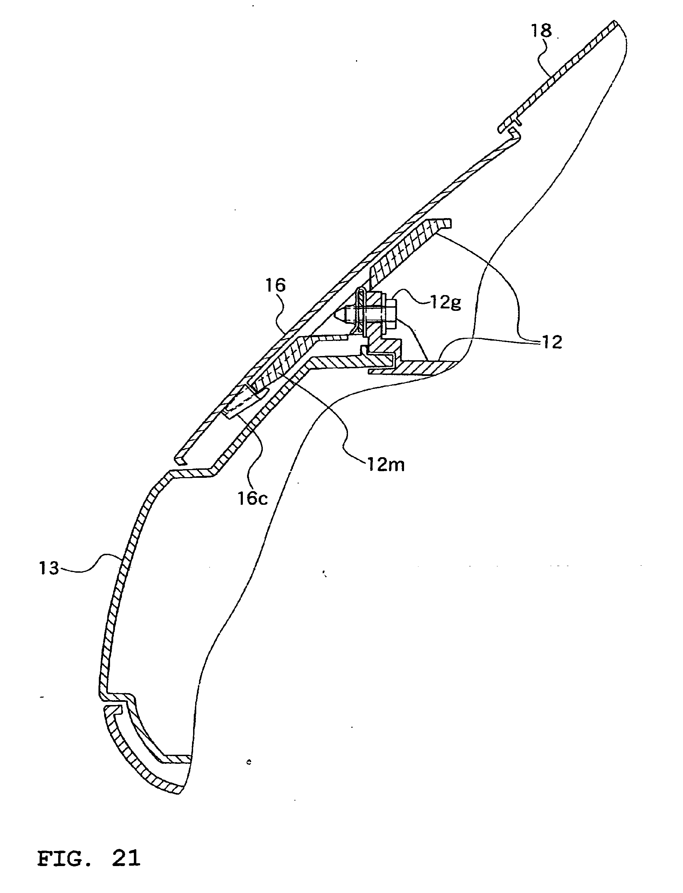

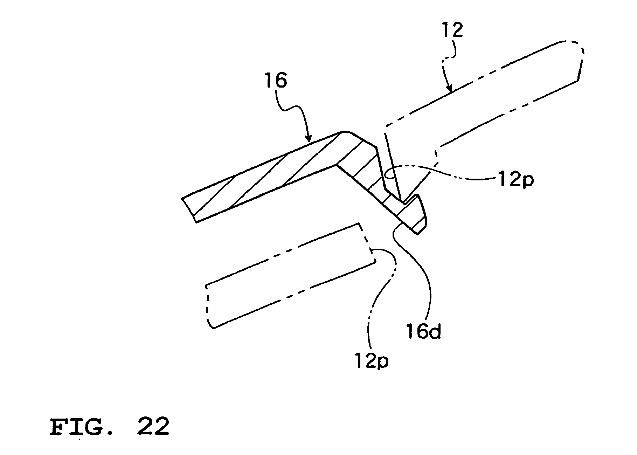

As shown in Fig. 21, at the generally center part in the back side of the connecting portion 16a, a lower engaged part 16c is formed. The engaged part 16c is fitted with a projection 12m formed in a vicinity of the headlamp mounting part 12g of the body cowl 12. Further, as shown in Fig. 22, in right and left side rims in the back side of the connecting portion 16a, a first engagement piece 16d protruding downwardly is fitted with an engagement hole 12p formed in the body cowl 12.

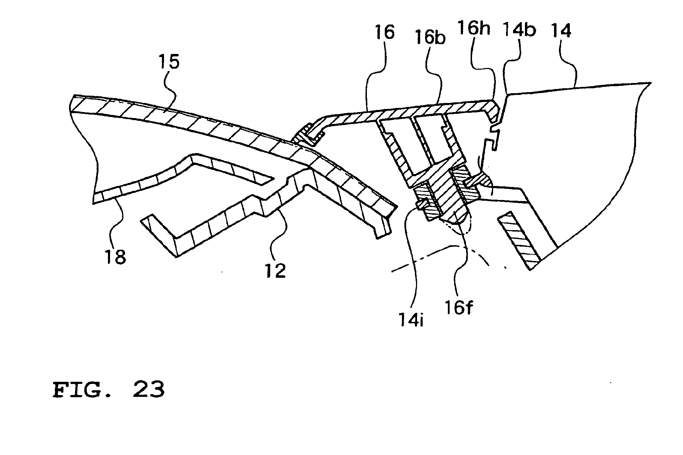

As shown in Fig. 13, in the upper section in the back side of the concealing part 16b, a second engagement piece 16e protrudes downwardly. The second engagement piece 16e is fitted with an engagement hole 17g formed in the securing part 17d of the first inner panel 17. In addition, as shown in Fig. 23, at a middle part in the back side of the concealing part 16b, a fitting pin 16f protrudes downwardly. The fitting pin 16f is engaged with an engaged part 14i formed below the second rim 14b of the flasher lamp 14.

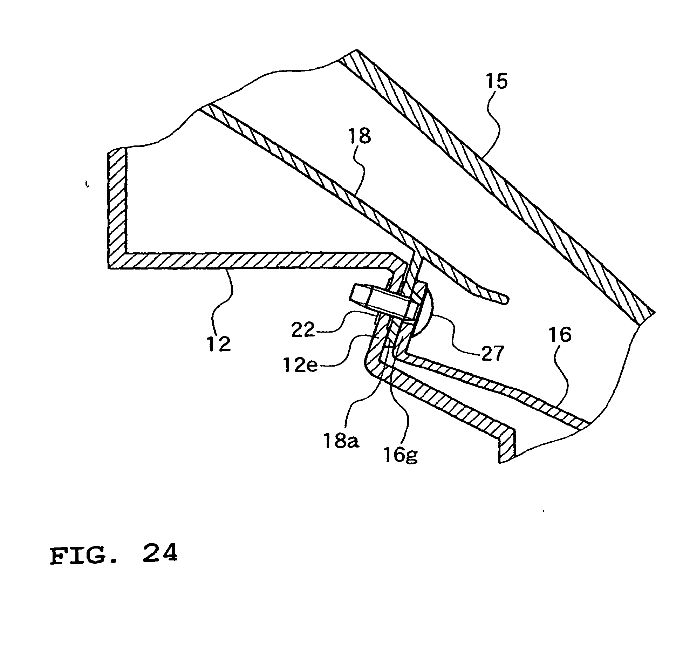

In addition, as shown in Fig. 24, a rising piece 16g is formed at the edge of the garnish panel 16 on the side of the screen 15 to be raised upward from the right side of the garnish panel 16, and secured to a garnish panel mount piece 12e of the body cowl 12 inside of the front end of the screen 15.

The garnish panel 16 is mounted to the body cowl 12 in the following manner.

First, as shown in Fig. 21, the lower engaged part 16c in the generally center part of the connecting portion 16a is fitted with the projection 12m of the body cowl 12. Next, as shown in Fig. 22, the first engagement piece 16d is fitted with the engagement hole 12p of the body cowl 12. Then, as shown in Fig. 23, the fitting pin 16f of the concealing part 16b is fitted with the engaged part 14i of the flasher lamp 14. In addition, as shown in Fig. 13, the second engagement piece 16e of the concealing part 16b is fitted with the engagement hole 17g of the first inner panel 17. In this case, the first and second engagement pieces 16d and 16e and the engagement pin 16f can all be mounted by one-touch operation.

Furthermore, as shown in Fig. 24, the rising piece 16g at the edge of the garnish panel 16 on the side of the screen 15 is secured to the garnish panel mount piece 12e of the body cowl 12 by a screw 27 in an inclined manner toward the concealing part 16b, together with the mount piece 18a of the second inner panel 18. This screw 27 is inserted obliquely upward from the top end rim side of the screen 15. Thereby, the screw 27 is mounted to the garnish panel mount piece 12e of the body cowl 12.

The mounting of the garnish panel 16 to the body cowl 12 is thereby completed. Under this mounting condition, the flasher positioning part 16h of the concealing part 16b is positioned to the second rim 14b of the flasher lamp 14.

Moreover, the concealing part 16b is positioned between the screen 15 and the right and left flasher lamps 14. Thus, the mount part 14e of the flasher lamp 14, the mount piece 15a of the screen, the second engagement piece 16e and the fitting pin 16f are covered by the concealing part 16b. In addition, the lower engaged part 16c and the first engagement piece 16d are covered by the connecting portion 16a. The rising piece 16g and the screw 27 are covered by the screen 15 from the vehicle front side.

According to the straddle-type vehicle having the mounting structure of the flasher lamp 14 as described above, first, when the flasher lamp 14 is secured to the body cowl 12, the mount part 14e at the second rim 14b of the flasher lamp14 is secured to the mounted part 12k of the body cowl 12. Thereby, the first rim 14a of the flasher lamp 14 can be positioned by using the flasher positioning part 12h as a reference point.

In addition, the mount part 14e of the flasher lamp 14 to the body cowl 12 is mounted at the side of the second rim 14b. This mount part 14e is covered by the concealing part 16b of the garnish panel 16. Without mounting the garnish panel 16, the mount part 14e of the flasher lamp 14 can be exposed to the forward side of the vehicle. Thereby, when a bulb is exchanged for the maintenance, the flasher lamp 14 can be easily removed or installed, so the maintenance job becomes easy.

With the garnish panel 16 being mounted to the body cowl 12, the concealing part 16b can cover the mount part 14e of the flasher lamp 14. Thus, the mount part 14e is not exposed to the outside, allowing a better outward appearance.

In addition, the fitting pin 16f is formed in the concealing part 16b in which the flasher positioning part 16h of the garnish panel 16 is formed. This fitting pin 16f is engaged with the engaged part 14i formed at the second rim 14b of the flasher lamp 14. Since the flasher positioning part 16h of the concealing part 16b of the garnish panel 16 can be mounted by using the second rim 14b as a reference point, the concealing part 16b of the garnish panel 16 can be precisely positioned relative to the second rim 14b of the flasher lamp 14.

Thereby, with the garnish panel 16 being mounted, the mount part 14e of the flasher lamp 14 is covered by the garnish panel 16 and not exposed to the outside. In addition, the first and second rims 14a and 14b of the flasher lamp 14 and adjacent body cowl 12 and the flasher positioning parts 12h and 16h of the garnish panel 16 can be precisely positioned and secured. This arrangement can prevent shifted positioning and uneven gaps and further allows excellent outward appearance.

Furthermore, the first inner panel 17 is positioned in the back side of the flasher lamp 14 in a longitudinal direction of the vehicle and thereby is secured to the body cowl 12. The flasher positioning part 17f of the first inner panel 17 is positioned to the third rim 14c at the top side of the flasher lamp 14. Thus, the three sides of the flasher lamp 14 forming the generally triangular shape in the vehicle front view are enclosed by three parts such as the body cowl 12, the garnish panel 16 and the first inner panel 17. In addition, each side can be precisely positioned to each of the above parts. Since the flasher lamp 14 is enclosed by those three parts and thereby precisely positioned, the.outward appearance can be improved.

Moreover, the securing part 17d between the first inner panel 17 and the body cowl 12 is covered by the garnish panel 16. This garnish panel 16 is engaged in a vicinity of the securing part 17d of the first inner panel 17. Thus, the garnish panel 16 and the first inner panel 17 can be precisely positioned, allowing good outward appearance.

The overlapping part 14g extending upwardly is formed in the third rim 14c of the flasher lamp 14. This overlapping part 14g is arranged to overlap with the first inner panel 17. Thus, with the flasher lamp 14 not being directly joined to the first inner panel 17, even if the positioning is shifted due to manufacturing errors, a gap will not be formed between the overlapping part 14g and the first inner panel 17. Thereby, good outward appearance can be assured.

Furthermore, the flasher lamp 14 is inserted toward the rear direction from the forward side. The fitting part 14h to be fitted with the fitted part 12f of the body cowl 12 is formed in the flasher lamp 14. When the garnish panel 16 is removed, the mount part 14e is exposed in the front side of the vehicle, allowing an access from the front side. Further, easy installment and removal of the flasher lamp 14 facilitates the maintenance job. In addition, since the securing direction of the mount part 14e of the flasher lamp 14 to the body cowl 12 is different from the insertion direction of the fitting part 14h. Thereby, the mounting of the flasher lamp 14 can be more securely assured.

Moreover, the rising piece 16g is formed at the edge of the garnish panel 16 on the side of the screen 15 to be raised upward. The rising piece 16g is mounted on the garnish panel mount piece 12e of the body cowl 12 by the screw 27 in an inclined manner toward the concealing part 16b of the garnish panel 16. Therefore, the mount part of the garnish panel 16 is invisible from the outside, allowing the better outward appearance. At the same time, when the screw 27 is removed and the concealing part is disengaged, the garnish panel 16 can be easily removed. Thereby, the maintenance can be easily performed.

As described above, for providing a straddle-type vehicle capable of precisely mounting a flasher lamp to the body cowl and securing excellent outward appearance and easy maintenance of the flasher lamp, the following is proposed: The headlamp 13 is mounted in the generally center part of the body cowl 12. The flasher lamps 14 are mounted in distance locations above the headlamp 13. The mount part formed at the second rim 14b is secured to the body cowl 12 with the first rim 14a of the flasher lamp 14 being positioned to the flasher positioning part 12h of the body cowl 12. The garnish panel 16 is mounted to the body cowl 12 with the flasher positioning part 16h of the garnish panel 16 being positioned to the second rim 14b of the flasher lamp 14. The mount part 14e of the flasher lamp 14 is covered by the concealing part 16b in which the flasher positioning part 16h of the garnish panel 16 is formed. The engaged part 14h is formed at the second rim 14b of the flasher lamp 14. The engaging part 16f to be engaged with the engaged part 14h is formed in the concealing part 16b.

## Claims

1. Straddle-type vehicle having a headlamp (13) mounted in a generally center part in a lateral direction of a body cowl (12) constituting a part of a vehicle cover located at a forward side of the vehicle, and a pair of right and left flasher lamps (14) disposed on both sides of the headlamp in a lateral direction of the vehicle, wherein a mount part (14e) formed at each of the right and left flasher lamps (14) is mounted to the body cowl (12), **characterized by**
a garnish panel (16) being removable mounted to the body cowl (12) and covering the mount part (14e), wherein the garnish panel (16) comprises an engaging part (16f) engaged with an engaged part (14i) formed at each of the right and left flasher lamps (14).

2. Straddle-type vehicle according to claim 1, **characterized in that** the pair of right and left flasher lamps (14) disposed in distanced locations above the headlamp (13) and/or that the flasher lamp (14) has a generally triangular shape in a vehicle front view.

3. Straddle-type vehicle according to claim 1 or 2, **characterized in that** the mount part (14e) of the flasher lamp (14) is formed at a side of a second rim (14b) of the flasher lamp (14), wherein a first rim (14a) of the flasher lamp (14) is positioned to a flasher positioning part (12h) of the body cowl (12).

4. Straddle-type vehicle according to at least one of claims 1 to 3,**characterized in that** the garnish panel (16) is removable mounted to the body cowl (12) with a flasher positioning part (16h) of the garnish panel (16) constituting a part of the vehicle cover being positioned to the second rim (14b), and/or **in that** the mount part (14e) of the flasher lamp (14) is covered by a concealing part (16b) in which the flasher positioning part (16h) of the garnish panel (16) is formed, and/or **in that** the engaging part (16f) is formed in the concealing part (16b) so that the engaging part (16f) is engaged with the engaged part (14i) formed at a side of the second rim (14b) of the flasher lamp (14).

5. Straddle-type vehicle according to at least one of claims 1 to 4, **characterized in that** a generally horizontal top side in the vehicle front view forms a third rim (14c), one side of other two sides located in an external side of the vehicle forms the first rim (14a), and/or the other side located in an interior side forms the second rim (14b).

6. Straddle-type vehicle according to at least one of claims 1 to 5, **characterized in that** an inner panel (17,18) constituting a part of the vehicle cover is positioned at a back side (17,18) of the flasher lamp (14) in a longitudinal direction of the vehicle, wherein the inner panel (17,18) is secured to the body cowl (12), and/or a flasher positioning part (17f) of the inner panel (17) is positioned to the third rim (14c) of the flasher lamp (14).

7. Straddle type vehicle according to at least one of claims 1 to 6, **characterized in that** a securing part (17d) between the inner panel (17) and the body cowl (12) is covered by the garnish panel (16), and the garnish panel (16) is engaged in a vicinity of the securing part (17d) of the inner panel (17).

8. Straddle-type vehicle according to at least one of claims 1 to 7, **characterized in that** an upwardly extending overlapping part (14g) is formed at the third rim (14c) of the flasher lamp (14), and the overlapping part (14g) overlaps with a forward side (17f) of the inner panel (17).

9. Straddle-type vehicle according to at least one of claims 1 to 8, **characterized in that** a fitting part (14h) is formed in the flasher lamp (14) so that the fitting part (14h) is fitted with a fitted part (12f) of the body cowl (12) by insertion of the flasher lamp (14) from the front side to the rear side, and a securing direction of the mount part (14e) is different from a direction of the insertion of the fitting part (14h).

10. Straddle-type vehicle according to at least one of claims 1 to 9, **characterized in that** the garnish panel (16) is positioned between a screen (15) and the flasher lamp (14) which is placed outwardly of the screen (15) in a lateral direction of the vehicle, in an inclined manner toward the screen (15) and in a lateral direction of the vehicle, and an upwardly rising piece (16g) is formed at the edge of the garnish panel (16) on the side of the screen (15), and mounted to a mount piece (12e) disposed on the body cowl (12) by a bolt (27), in particular a screw, in an inclined manner toward the front side of the vehicle.

## Patentansprüche

1. Fahrzeug vom Grätschsitz- Typ mit einem Scheinwerfer (13), montiert in einem im Wesentlichen Mittelteil in einer seitlichen Richtung einer Karosserieverkleidung (12), die einen Teil einer Fahrzeugabdeckung, angeordnet an einer vorderen Seite des Fahrzeuges, bildet, und ein Paar von rechten und linken Blinklampen (14), angeordnet auf beiden Seiten des Schweinwerfers in einer seitlichen Richtung des Fahrzeuges, wobei ein Montageteil (14e), gebildet an jeder der rechten und linken Blinklampe (14) an der Karosserieverkleidung (12) gebildet ist, **gekennzeichnet durch**
ein Verzierungspanel (16), das entfernbar an der Karosserieverkleidung (12) montiert ist und das Montageteil (14e) abdeckt, wobei das Verzierungspanel (16) ein Eingriffsteil (16f) aufweist, im Eingriff mit einem Eingriffsteil (14i), gebildet an jeder der rechten und linken Blinklampen (14).

2. Fahrzeug vom Grätschsitz- Typ nach Anspruch 1, **dadurch gekennzeichnet, dass** das Paar der rechten und linken Blinklampen (14) an beabstandeten Orten oberhalb des Scheinwerfers (13) angeordnet ist und / oder dass die Blinklampe (14) eine im Wesentlichen dreieckige Form in einer Ansicht des Fahrzeuges von vom hat.

3. Fahrzeug vom Grätschsitz- Typ nach Anspruch 1 oder 2, **dadurch gekennzeichnet, dass** das Montageteil (14e) an einer Seite eines zweiten Randes (14b) der Blinklampe (14) gebildet ist, wobei ein erster Rand (14a) der Blinklampe (14) an einem Blinker- Positionierungsteil (12h) der Karosserieverkleidung (12) positioniert ist.

4. Fahrzeug vom Grätschsitz- Typ nach zumindest einem der Ansprüche 1 bis 3, **dadurch gekennzeichnet, dass** das Verzierungspanel (16) an der Karosserieverkleidung (12) mit einem Blinker- Positionierungsteil (16h) des Verzierungspanel (16) entfernbar montiert ist, das einen Teil der Fahrzeugabdeckung bildet, das an dem zweiten Rand (14b) positioniert ist, und / oder dadurch, dass das Montageteil (14e) der Blinklampe (14) durch ein Verdeckteil (16b) abgedeckt ist, in dem das Blinker- Positionierungsteil (16h) des Verzierungspanels (16) gebildet ist, und / oder dadurch, dass das Eingriffsteil (16f) in dem Verdeckteil (16b) gebildet ist, so dass das Eingriffsteil (16f) mit dem Eingriffsteil (14i), gebildet an einer Seite des zweiten Randes (14b)der Blinklampe (14) im Eingriff ist.

5. Fahrzeug vom Grätschsitz- Typ nach zumindest einem der Ansprüche 1 bis 4, **dadurch gekennzeichnet, dass** eine im Wesentlichen horizontale Oberseite in der Ansicht des Fahrzeuges von vom einen dritten Rand (14c) bildet, eine Seite der anderen zwei Seiten, angeordnet in einer Außenseite des Fahrzeuges, den ersten Rand (14a) bildet und / oder die andere Seite, angeordnet in einer Innenseite, den zweiten Rand (14b) bildet.

6. Fahrzeug vom Grätschsitz- Typ nach zumindest einem der Ansprüche 1 bis 5, **dadurch gekennzeichnet, dass** ein Innenpanel (17, 18), das einen Teil der Fahrzeugabdeckung bildet, an einer Rückseite (17, 18) der Blinklampe (14) in einer Längsrichtung des Fahrzeuges positioniert ist, wobei das Innenpanel (17, 18) an der Karosserieverkleidung (12) befestigt ist und / oder ein Blinker- Positionierungsteil (17f) des Innenpanels (17) an dem dritten Rand (14c) der Blinklampe (14) positioniert ist.

7. Fahrzeug vom Grätschsitz- Typ nach zumindest einem der Ansprüche 1 bis 6, **dadurch gekennzeichnet, dass** ein Befestigungsteil (17d) zwischen dem Innenpanel (17) und der Karosserieverkleidung (12) durch das Verzierungspanel (16) abgedeckt ist und das Verzierungspanel (16) in einer Nähe des Befestigungsteiles (17d) des Innenpanels (17) im Eingriff ist.

8. Fahrzeug vom Grätschsitz- Typ nach zumindest einem der Ansprüche 1 bis 7, **dadurch gekennzeichnet, dass** ein sich nach oben erstreckendes Überlappungsteil (14g) an dem dritten Rand (14c) der Blinklampe (14) gebildet ist und das Überlappungsteil (14g) mit einer vorderen Seite (17f) des Innenpanels (17) überlappt.

9. Fahrzeug vom Grätschsitz- Typ nach zumindest einem der Ansprüche 1 bis 8, **dadurch gekennzeichnet, dass** ein Einsetzteil (14h) in der Blinklampe (14) gebildet ist, so dass das Einsetzteil (14h) mit einem eingesetzten Teil (12f) der Karosserieverkleidung (12) durch Einsetzen der Blinklampe (14) von der vorderen Seite zu der hinteren Seite eingesetzt wird, und eine Befestigungsrichtung des Montageteils (14e) von einer Richtung des Einsetzens des Einsetzteils (14h) verschieden ist.

10. Fahrzeug vom Grätschsitz- Typ nach zumindest einem der Ansprüche 1 bis 9, **dadurch gekennzeichnet, dass** das Verzierungspanel (16) zwischen einem Schutz (15) und der Blinklampe (14), die außerhalb des Schutzes (15) in einer seitlichen Richtung des Fahrzeuges platziert ist, in einer geneigten Weise in Richtung zu dem Schutz (15) und in einer seitlichen Richtung des Fahrzeuges positioniert ist und ein nach oben aufsteigendes Stück (16g) an der Kante des Verzierungspanels (16) auf der Seite des Schutzes (15) gebildet ist und montiert ist an einem Montagestück (12e), angeordnet an der Karosserieverkleidung (12) durch einen Bolzen (27), insbesondere eine Schraube, in einer geneigten Weise in Richtung zu der vorderen Seite des Fahrzeuges.

## Revendications

1. Véhicule du type monté à califourchon ayant un phare (13) monté dans une partie généralement centrale dans une direction latérale d'un capot de corps (12) constituant une partie d'un recouvrement de véhicule situé au niveau d'un côté avant du véhicule, et une paire de clignotants droit et gauche (14) disposés des deux côtés du phare dans une direction latérale du véhicule, dans lequel une partie de montage (14e) formée au niveau de chacun des clignotants droit et gauche (14) est montée sur le capot de corps (12), **caractérisé par**
un panneau de garniture (16) monté de manière amovible sur le capot de corps (12), et recouvrant la partie de montage (14e), le panneau de garniture (16) comportant une partie de mise en prise (16f) mise en prise avec une partie en prise (14i) formée au niveau de chacun des clignotants droit et gauche (14).

2. Véhicule du type monté à califourchon selon la revendication 1, **caractérisé en ce que** la paire de clignotants droit et gauche (14) disposés à des emplacements éloignés au-dessus du phare (13) et/ou en ce que le clignotant (14) a une forme généralement triangulaire dans une vue avant du véhicule.

3. Véhicule du type monté à califourchon selon la revendication 1 ou 2, **caractérisé en ce que** la partie de montage (14e) du clignotant (14) est formée au niveau d'un côté d'un deuxième rebord (14b) du clignotant (14), dans lequel un premier rebord (14a) du clignotant (14) est positionné sur une partie de positionnement de clignotant (12h) du capot de corps (12).

4. Véhicule du type monté à califourchon selon l'une quelconque des revendications 1 à 3, **caractérisé en ce que** le panneau de garniture (16) est monté de manière amovible sur le capot de corps (12) avec une partie de positionnement de clignotant (16h) du panneau de garniture (16) constituant une partie du recouvrement de véhicule positionnée sur le deuxième rebord (14b), et/ou **en ce que** la partie de montage (14e) du clignotant (14) est recouverte par une partie de dissimulation (16b) dans laquelle la partie de positionnement de clignotant (16h) du panneau de garniture (16) est montée, et/ou **en ce que** la partie de mise en prise (16f) est formée dans la partie de dissimulation (16b) de sorte que la partie de mise en prise (16f) est mise en prise avec la partie en prise (14i) formée au niveau d'un côté du deuxième rebord (14b) du clignotant (14).

5. Véhicule du type monté à califourchon selon l'une quelconque des revendications 1 à 4, **caractérisé en ce qu'**un côté supérieur généralement horizontal dans la vue avant du véhicule forme un troisième rebord (14c), un premier côté des deux autres côtés positionné dans un côté externe du véhicule formant le premier rebord (14a), et/ou l'autre côté positionné dans un côté intérieur formant le deuxième rebord (14b).

6. Véhicule du type monté à califourchon selon l'une quelconque des revendications 1 à 5,
**caractérisé en ce qu'**un panneau intérieur (17, 18) constituant une partie du recouvrement de véhicule est positionné au niveau d'un côté arrière (17, 18) du clignotant (14) dans une direction longitudinale du véhicule, dans lequel le panneau intérieur (17, 18) est fixé sur le capot de corps (12), et/ou une partie de positionnement de clignotant (17f) du panneau intérieur (17) est positionnée sur le troisième rebord (14c) du clignotant (14).

7. Véhicule du type monté à califourchon selon l'une quelconque des revendications 1 à 6, **caractérisé en ce qu'**une partie de fixation (17d) entre le panneau intérieur (17) et le capot de corps (12) est recouverte par le panneau de garniture (16), et le panneau de garniture (16) est mis en prise dans une proximité de la partie de fixation (17d) du panneau intérieur (17).

8. Véhicule du type monté à califourchon selon l'une quelconque des revendications 1 à 7, **caractérisé en ce qu'**une partie de chevauchement s'étendant vers le haut (14g) est formée au niveau du troisième rebord (14c) du clignotant (14), et la partie de chevauchement (14g) chevauche un côté avant (17f) du panneau intérieur (17).

9. Véhicule du type monté à califourchon selon l'une quelconque des revendications 1 à 8, **caractérisé en ce qu'**une partie de raccordement (14h) est formée dans le clignotant (14), de sorte que la partie de raccordement (14h) est agencée dans une partie raccordée (12f) du capot de corps (12) par insertion du clignotant (14) à partir du côté avant vers le côté arrière, et une direction de fixation de la partie de montage (14e) est différente d'une direction de l'insertion de la partie de raccordement (14h).

10. Véhicule du type monté à califourchon selon l'une quelconque des revendications 1 à 9, **caractérisé en ce que** le panneau de garniture (16) est positionné entre un pare-brise (15) et le clignotant (14) qui est placé à l'extérieur du pare-brise (15) et dans une direction latérale du véhicule, d'une manière inclinée vers le pare-brise (15) et dans une direction latérale du véhicule, et une pièce montant vers le haut (16g) est formée au niveau du bord du panneau de garniture (16) sur le côté du pare-brise (15), et est montée sur une pièce de montage (12e) disposée sur le capot de corps (12) par un boulon (27), en particulier une vis, d'une manière inclinée vers le côté avant du véhicule.
